# EUROPEAN PATENT APPLICATION

(11) **EP 4 650 220 A1**
(43) Date of publication of application: **19.11.2025**
(21) Application number: 24741261.2
(22) Date of filing: 09.01.2024
(51) Int. Cl.: B60N 3/10, F25D 11/00, F25B 31/00, F04B 39/00, F04B 39/06

(54) **REFRIGERATOR COMPRESSOR COOLING AND DENOISING STRUCTURE, REFRIGERATOR COMPRESSOR COOLING ASSEMBLY AND VEHICLE**

(30) Priority: 12.01.2023 CN 202310067845
(71) Applicant: Shanghai Lixiang Automobile Co., Ltd., Shanghai 201800 (CN)
(72) Inventor: CHEN, Zhijian, Shanghai 201800 (CN); QIU, Peng, Shanghai 201800 (CN); ZHANG, Ziwen, Shanghai 201800 (CN)
(74) Representative: Maiwald GmbH
(86) International application number: PCT/CN2024/071443
(87) International publication number: WO 2024/149264

(57) **Abstract**

A refrigerator compressor cooling and denoising structure, comprising a denoising shell (1) and an air intake device (2), wherein the denoising shell comprises an air intake hole (11), an air output hole (12), an air duct (14), and an accommodating cavity (13) for accommodating a refrigerator compressor; the air duct is in communication with the accommodating cavity; one end of the air duct is in communication with the air intake hole, and the other end thereof is in communication with the air output hole; the air intake device is connected to the denoising shell; and an air inlet of the air intake device is in communication with the air intake hole. Further provided are a cooling assembly for a refrigerator compressor and a vehicle. The denoising shell of the refrigerator compressor cooling and denoising structure soaks up noise generated by the refrigerator compressor, thereby reducing transmission of the noise. The air intake device allows air to flow, so as to rapidly discharge hot air in the denoising shell to the outside thereof, thereby reducing the heat of the refrigerator compressor. The cooling assembly for a refrigerator compressor, which has the refrigerator compressor cooling and denoising structure, and the vehicle improve passenger riding experience.

## Description

### CROSS-REFERENCE TO RELATED APPLICATION

The present application claims the benefit of priority to Chinese patent application No. 202310067845.1, filed on January 12, 2023, the contents of which are incorporated herein by reference in its entirety for all purposes.

### FIELD

The present invention relates to the technical field of vehicles, and particularly a cooling and noise reduction structure for a refrigerator compressor, a cooling assembly for a refrigerator compressor and a vehicle.

### BACKGROUND

In order to improve quality of driving, it is a choice for most people to install a car refrigerator in the vehicle.

At present, a compressor of a vehicle-mounted refrigerator will generate high-frequency noise in a working process of the compressor, which will seriously affect experience of a passenger in the vehicle. Outer surfaces of some compressors of refrigerators are equipped with sound-absorbing cotton, which reduces some noise, but leads to poor heat dissipation effect of the compressors of the refrigerator.

### SUMMARY

The present invention aims to provide a cooling and noise reduction structure for the refrigerator compressor, a cooling assembly for a refrigerator compressor and a vehicle with good noise reduction and heat dissipation effects.

In a first aspect, the present invention provides a cooling and noise reduction structure for the refrigerator compressor, including a noise reduction housing and an air inlet device, wherein the noise reduction housing includes an air inlet hole, an air outlet hole, an air duct and an accommodating cavity configured to accommodate the refrigerator compressor; the air duct is communicated with the accommodating cavity, an end of the air duct is communicated with the air inlet hole, and another end of the air duct is communicated with the air outlet hole; and the air inlet device is connected to the noise reduction housing, and an air inlet of the air inlet device is communicated with the air inlet hole.

Further, the cooling and noise reduction structure for a refrigerator compressor further includes an installation tray, wherein the noise reduction housing is connected to the installation tray, and the air inlet device is connected to a side of the installation tray away from the noise reduction housing.

Further, the installation tray has a grid or a through hole communicated with the air inlet hole, and the air inlet of the air inlet device is communicated with the grid or the through hole on the installation tray.

Further, the installation tray has an installation groove with a bottom wall, and the bottom wall has a communication hole communicated with the air inlet hole; and the air inlet device includes a device frame and an air inlet fan, wherein the air inlet fan is installed in the device frame, and the device frame is installed in the installation groove.

Further, the bottom wall includes a first end and a second end, and a distance between the first end and an opening of the installation groove is smaller than a distance between the second end and the opening of the installation groove.

Further, the cooling and noise reduction structure for a refrigerator compressor further includes a connecting piece, wherein the noise reduction housing is detachably connected to the installation tray through the connecting piece.

Further, the connecting piece includes a cushion block, a connecting sheet and a connecting bolt; and the cushion block is placed on the installation tray, the connecting sheet is connected to the noise reduction housing, and the connecting bolt passes through the connecting sheet and the cushion block and is connected to the installation tray.

Further, the connecting piece further includes a clamping sheet having a sheet body and two clamping legs; and the two clamping legs are arranged at intervals, and the connecting bolt is clamped between the two clamping legs.

Further, the sheet body is perpendicular to the two clamping legs.

Further, the connecting sheet includes a first sheet body and a second sheet body connected to the first sheet body; and the first sheet body is connected to the noise reduction housing, the second sheet body is connected to the connecting bolt, and the first sheet body is perpendicular to the second sheet body.

Further, the installation tray includes a tray body and a support rod configured to be connected to an external frame, the support rod is connected to the tray body and extends outwards, and the noise reduction housing is connected to the tray body.

Further, two support rods are arranged at intervals on the tray body, and the noise reduction housing is located between the two support rods.

In a second aspect, the present invention provides a cooling assembly for a refrigerator compressor, including the cooling and noise reduction structure for a refrigerator compressor as described in the first aspect.

Further, the cooling assembly for a refrigerator compressor includes a passenger compartment frame having a first frame plate and a second frame plate, wherein a frame cavity and an airflow channel communicated with the frame cavity are formed between the first frame plate and the second frame plate, and the cooling and noise reduction structure for a refrigerator is installed within the frame cavity; the first frame plate has a first grille configured to be communicated with an interior of an passenger compartment, and the second frame plate has a second grille configured to be communicated with the interior of the passenger compartment, and the first grille and the second grille are respectively communicated with the airflow channel; a first fan is provided at an inner side of the first frame plate, and an air inlet of the first fan is communicated with the first grille; and a second fan is provided at an inner side of the second frame plate has, and an air outlet of the second fan is communicated with the second grille.

In a third aspect, a vehicle provided by the application includes the cooling assembly for the refrigerator compressor described in the second aspect.

The noise reduction housing of the cooling and noise reduction structure for the refrigerator compressor absorbs the noise generated by the refrigerator compressor, thus reducing the spread of noise. The air inlet device makes the air flow and quickly discharges the hot air within the noise reduction housing to the outside of the noise reduction housing, thus reducing the heat of the refrigerator compressor. The cooling assembly for the refrigerator compressor and the vehicle with the cooling and noise reduction structure for the refrigerator compressor improve the riding experience of a passenger.

### BRIEF DESCRIPTION OF THE DRAWINGS

FIG. 1 is a schematic diagram of a cooling and noise reduction structure for a refrigerator compressor according to an embodiment of the present application;
FIG. 2 is a schematic sectional view of a noise reduction housing according to an embodiment of the present application;
FIG. 3 is a schematic diagram of a noise reduction housing and an installation tray according to an embodiment of the present application;
FIG. 4 is a schematic view of a noise reduction housing and an installation tray according to an embodiment of the present application from another angle;
FIG. 5 is a schematic diagram of an installation groove according to an embodiment of the present application;
FIG. 6 is a schematic diagram of a connecting piece according to an embodiment of the present application;
FIG. 7 is a schematic diagram of a connecting sheet according to an embodiment of the application;
FIG. 8 is a schematic diagram of a cooling assembly for a refrigerator compressor according to an embodiment of the present application;
FIG. 9 is a schematic view of a cooling assembly for a refrigerator compressor according to an embodiment of the present application from another perspective.

### DETAILED DESCRIPTION

In the following, specific embodiments of the present application will be further explained with the attached drawings.

It is easy to understand that according to the technical solution of the present application, various alternative structural modes and implementation modes can be used by skills in the field without changing the essential spirit of the present application. Therefore, the following detailed description and drawings are only illustrative explanations of the technical solution of the present application, and should not be regarded as the whole of the present application or as the limitation to the present technical solution.

Directional terms such as up, down, left, right, front, rear, front, back, top and bottom mentioned or possibly mentioned in the specification are defined relative to structures shown in the drawings, which are relative concepts and thus may change accordingly according to their different positions and different using states. Therefore, these or other directional terms should not be interpreted as restrictive terms.

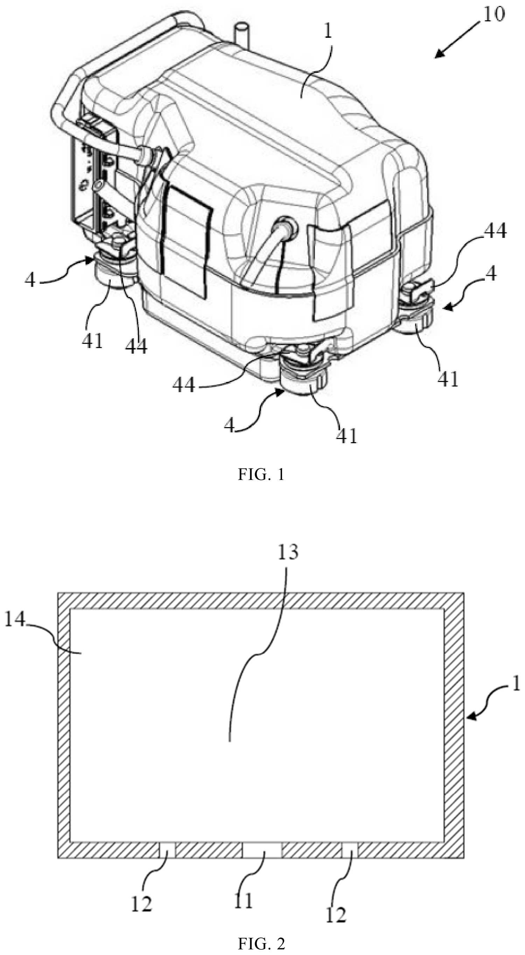

As shown in FIGS. 1-4, a cooling and noise reduction structure 10 for a refrigerator compressor according to an embodiment of the present application includes a noise reduction housing 1 and an air inlet device 2. The noise reduction housing 1 includes an air inlet hole 11, an air outlet hole 12, an air duct 14 and an accommodating cavity 13 for accommodating the refrigerator compressor.

The air duct 14 is communicated with the accommodating cavity 13, an end of the air duct 14 is communicated with the air inlet hole 11, and another end of the air duct 14 is communicated with the air outlet hole 12.

The air inlet device 2 is connected to the noise reduction housing 1, and an air inlet of the air inlet device 2 is communicated with the air inlet hole 11.

The cooling and noise reduction structure 10 for the refrigerator compressor is applied to a vehicle-mounted refrigerator, which can reduce the noise of the refrigerator compressor and ensure good heat dissipation.

The cooling and noise reduction structure 10 for the refrigerator compressor includes a noise reduction housing 1 and an air inlet device 2. The noise reduction housing 1 has an accommodating cavity 13 and an air duct 14. The refrigerator compressor is located in the accommodating cavity 13 and is wrapped by the noise reduction housing 1. The air duct 14 surrounds outside of the accommodating cavity 13, and the air duct 14 is communicated with the accommodating cavity 13. When the refrigerator compressor generates sound, the noise reduction housing 1 absorbs part of the sound during the sound propagation process, which hinders the sound propagation, thus reducing the noise.

The noise reduction housing 1 has an air inlet hole 11 and an air outlet hole 12, and the air inlet hole 11 and the air outlet hole 12 are respectively communicated with an air duct 14. The air inlet device 2 has an air inlet communicated with the air inlet hole 11. The air inlet device 2 generates air flow, which enters the noise reduction housing 1 from the air inlet through the air inlet hole 11, and then flows along the air duct 14 and flows out from the air outlet hole 12. When the refrigerator compressor is started, heat is generated, and the heat is radiated to the air in the accommodating cavity 13. When the airflow flows in the air duct 14, the airflow drives the air in the accommodating cavity 13 to flow and takes away the heat. In this way, the heat emitted by the refrigerator compressor can be brought out of the noise reduction housing 1 by the airflow in time, so as to dissipate heat in time, which keeps the heat of the refrigerator compressor in the normal temperature range and ensure the normal operation of the refrigerator compressor. The accumulated heat generated by the refrigerator compressor can reach above 80°C under the package of the noise reduction housing 1, and the temperature can be reduced to below 60°C after heat dissipation.

In some embodiments, as shown in FIGS. 1-2, the noise reduction housing 1 has a plurality of air outlet holes 12 which are arranged at intervals.

In some embodiments, the noise reduction housing 1 has two air outlet holes 12, and the air flow generated by the air inlet device 2 can flow out from the two air outlet holes 12 respectively after entering the noise reduction housing 1, thus improving the speed of air flow discharging from the noise reduction housing 1 and improving the heat dissipation effect.

In some embodiments, the noise reduction housing 1 can also have a plurality of air outlet holes 12.

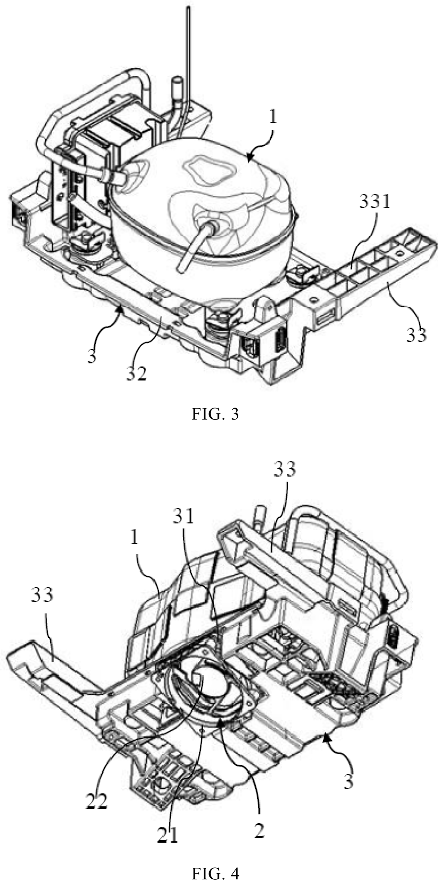

In some embodiments, as shown in FIGS. 3-5, the installation tray 3 is further included, the noise reduction housing 1 is connected to the installation tray 3, and the air inlet device 2 is connected to a side of the installation tray 3 away from the noise reduction housing 1.

In some embodiments, the cooling and noise reduction structure 10 for the refrigerator compressor further includes an installation tray 3 located below the noise reduction housing 1, and the noise reduction housing 1 is installed and fixed on the installation tray 3. The air inlet device 2 is connected to a bottom of the installation tray 3 and is opposite to the installation tray 3. The installation tray 3 provides an installation position for the noise reduction housing 1 and the air inlet device 2, which is convenient for installation and assembly.

In some embodiments, the installation tray 3 has a grid or a through hole communicated with the air inlet hole, and the air inlet of the air inlet device 2 is communicated with the grid and the through hole on the installation tray 3.

In some embodiments, as shown in FIGS. 3-5, the installation tray 3 has an installation groove 31 with a bottom wall 311, the bottom wall 311 has a communication hole 312 communicated with the air inlet hole 11. The air intake device 2 includes a device frame 21 and an air intake fan 22 installed in the device frame 21, and the device frame 21 is installed in the installation groove 31.

In some embodiments, an installation groove 31 is recessed at the bottom of the installation tray 3 towards the noise reduction housing 1. The installation groove 31 has a bottom wall 311, which is a wall surface opposite to the installation groove 31. The bottom wall 311 has a communication hole 312 communicated with the air inlet hole 11.

The air intake device 2 includes a device frame 21 and an air intake fan 22. The air intake fan 22 is connected to the device frame 21 and generates airflow when it is started. The device frame 21 is installed within the installation groove 31, and the airflow generated by the air inlet fan 22 enters the air inlet hole 11 from the communication hole 312. The installation groove 31 determines the installation position of the air inlet device 2, and can limit the movement of the air inlet device 2 after installation.

In some embodiments, as shown in FIGS. 3-5, the bottom wall 311 includes a first end 3111 and a second end 3112, and a distance between the first end 3111 and an opening of the installation groove 31 is smaller than a distance between the second end 3112 and the opening of the installation groove 31.

In some embodiments, the bottom wall 311 is inclined and has a first end 3111 and a second end 3112. The distance from the first end 3111 to the opening of the installation groove 31 is smaller than the distance from the second end 3112 to the opening of the installation groove 31, that is, a depth of the installation groove 31 at the first end 3111 is smaller than a depth of the installation groove 31 at the second end 3112. In this way, the bottom wall 311 is inclined, and the corresponding communication hole 312 is also an inclined hole, so that the airflow generated by the fan 22 enters the noise reduction housing 1 in an inclined direction. This arrangement can increase an area of the communication hole 312, allow more airflow to enter and improve the heat dissipation efficiency.

In some embodiments, as shown in FIG. 1, FIG. 3 and FIG. 6, a connecting piece 4 is further included in the cooling and noise reduction structure 10, and the noise reduction housing 1 is detachably connected to the installation tray 3 through the connecting piece 4. This arrangement facilitates the installation and disassembly of the noise reduction housing 1. The noise reduction housing 1 can be connected to and separated from the installation tray 3, thus it is convenient to be mounted and dismounted.

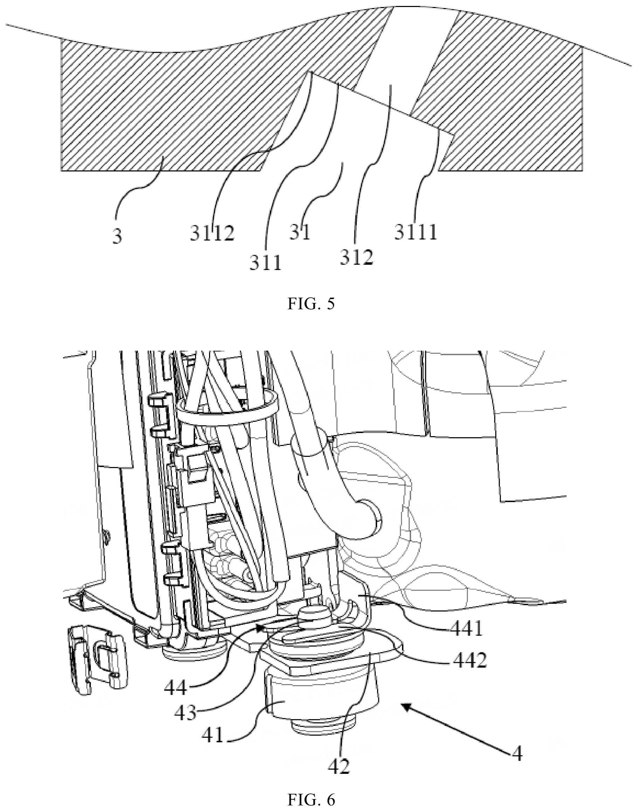

In some embodiments, as shown in FIG. 6, the connecting piece 4 includes a cushion block 41, a connecting sheet 42 and a connecting bolt 43. The cushion block 41 is placed on the installation tray 3, the connecting sheet 42 is connected to the noise reduction housing 1, and the connecting bolt 43 passes through the connecting sheet 42 and the cushion block 41 and is connected to the installation tray 3.

In some embodiments, the cushion block 41 has certain flexibility and can play a buffering role. The cushion block 41 is placed on the installation tray 3, and a side of the connecting sheet 42 is connected to the noise reduction housing 1, and another side is in contact with the cushion block 41. The connecting bolt 43 fixes the connecting sheet 42 and the cushion block 41 to the installation tray 3. With this arrangement, it is convenient to install and fix the noise reduction housing 1, and the external force received by the noise reduction housing 1 can be buffered.

In some embodiments, as shown in FIG. 6, the connecting piece 4 further includes a clamping sheet 44 having a sheet body 441 and two clamping legs 442. The two clamping legs 442 are arranged at intervals, and the connecting bolt 43 is clamped between the two clamping legs 442.

In some embodiments, the connecting piece 4 also has a clamping sheet 44 including a sheet body 441 and two clamping legs 442. The two clamping legs 442 are connected to the sheet body 441, two clamping legs 442 has an interval between them, and a clamping space is formed between the two clamping legs 442. During installation, the two clamping legs 442 clamp the connecting bolt 43 to limit the rotation of the connecting bolt 43.

In some embodiments, as shown in FIG. 6, the sheet body 441 is perpendicular to the clamping legs 442. The sheet body 441 is connected to the clamping legs 442 to form an L-shape, and the sheet body 441 provides a stress position, which is convenient for people to operate.

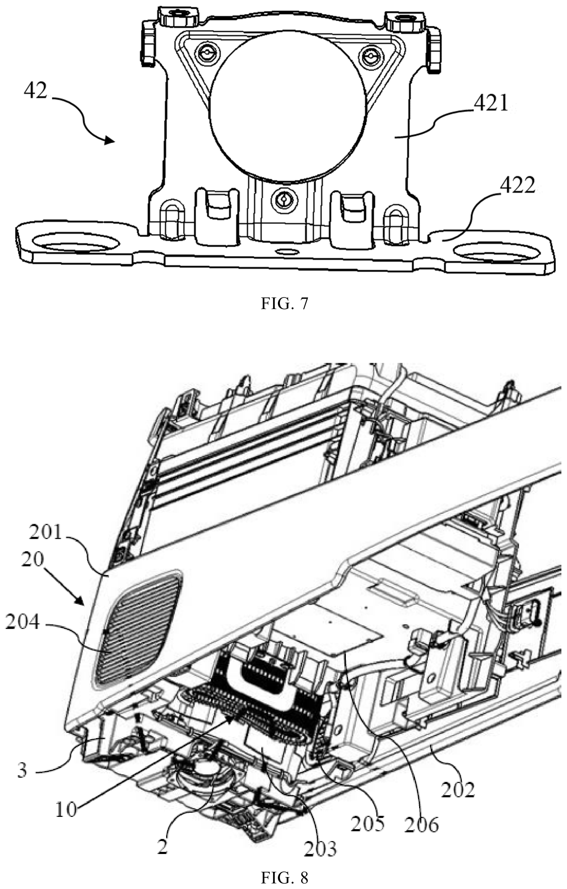

In some embodiments, as shown in FIGS. 6-7, the connecting sheet 42 includes a first sheet body 421 and a second sheet body 422 connected to the first sheet body 421. The first sheet body 421 is connected to the noise reduction housing 1, and the second sheet body 422 is connected to the connecting bolt 43, and the first sheet body 421 is perpendicular to the second sheet body 422.

In some embodiments, the connecting sheet 42 includes a first sheet body 421 and a second sheet body 422, the first sheet body 421 is connected above the second sheet body 422, and the extending direction of the first sheet body 421 is perpendicular to the extending direction of the second sheet body 422. When the connecting sheet 42 is connected, the first sheet body 421 is connected to the noise reduction housing 1, and the second sheet body 422 is connected to the connecting bolt 43. The connecting sheet 42 as arranged above has a more reasonable structure, and the contact areas between the first sheet body 421 and the second sheet body 422 and the corresponding connecting objects are larger, so that the connection is firmer.

In some embodiments, the first sheet body 421 is connected and fixed to the compressor within the noise reduction housing 1, and extends through the noise reduction housing 1 to the outside.

In some embodiments, as shown in FIGS. 3-4, the installation tray 3 includes a tray body 32 and a support rod 33 connected with an external frame. The support rod 33 is connected to the tray body 32 and extends outward, and the noise reduction housing 1 is connected to the tray body 32.

In some embodiments, the installation tray 3 has a tray body 32 and a support rod 33. Two support rods 33 are arranged on the tray body 32 at intervals, and the noise reduction housing 1 is installed on the tray body 32 between the two support rods 33. An end of the support rod 33 is connected to the tray body 32, and another end of the support rod 33 extends outward. When the installation tray 3 is installed, it fits with the external frame, and the support rod 33 increases its connection area with the external frame, thus making the installation tray 3 more firmly connected.

In some embodiments, the support rod 33 has a material reducing hole 331, thus reducing the weight of the support rod 33.

In some embodiments, as shown in FIGS. 1-3, the noise reduction housing 1 is a rubber housing.

In some embodiments, the noise reduction housing 1 is a rubber housing, that is, it is made of rubber material. Rubber material has good elasticity, which makes it difficult to be damaged and can better protect the refrigerator compressor. Moreover, rubber can absorb noise better and the noise reduction effect is better.

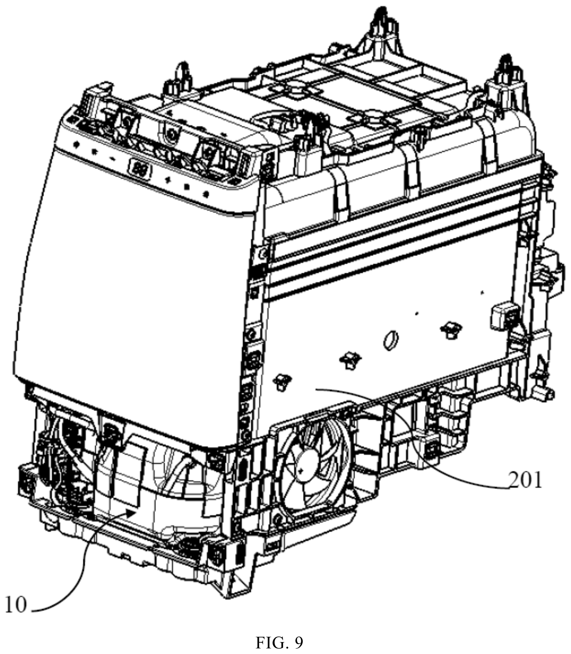

As shown in FIGS. 1-9, a cooling assembly for a refrigerator compressor provided by an embodiment of the present application includes any one of the cooling and noise reduction structures 10 for a refrigerator compressor.

The refrigerator compressor will be a component as a part of the vehicle frame and have the cooling and noise reduction structure 10 for the refrigerator compressor. The specific structure and function of the cooling and noise reduction structure 10 for the refrigerator compressor refer to the relevant contents mentioned above, and will not be described here. The cooling and noise reduction structure 10 for the refrigerator compressor also has a good heat dissipation effect while playing a role of noise reduction, ensuring the normal operation of the refrigerator compressor, thus improving the quality of the cooling assembly of the refrigerator compressor.

In some embodiments, as shown in FIGS. 1-9, the cooling assembly for a refrigerator compressor further includes a passenger compartment frame 20 having a first frame plate 201 and a second frame plate 202, and a frame cavity 203 and an airflow channel 206 communicated with the frame cavity 203 are formed between the first frame plate 201 and the second frame plate 202, and the cooling and noise reduction structure 10 for the refrigerator compressor is installed in the frame cavity 203. The first frame plate 201 has a first grille 204 configured to be communicated with interior of a passenger compartment, and the second frame plate 202 has a second grille 205 configured to be communicated with interior of the passenger compartment. The first grille 204 and the second grille 205 are respectively communicated with the air flow passage 206. A first fan (not shown in the figures) is arranged inside the first frame plate 201, and the air inlet of the first fan is communicated with the first grille 204. A second fan (not shown in the figures) is arranged inside the second frame plate 202, and the air outlet of the second fan is communicated with the second grille 205.

In some embodiments, the cooling assembly for the refrigerator compressor is installed within a central armrest box of the passenger compartment, and the first frame plate 201 and the second frame plate 202 are frame plates of the central armrest box. The range between an inner surface of the first frame plate 201 and an inner surface of the second frame plate 202 is the frame cavity 203. The first frame plate 201 has the first grille 204, and an inner surface of the first frame plate 201 is connected to the first fan. The first fan is an air inlet fan, and the air inlet of the first fan is communicated with the first grille 204. The airflow generated by the first fan enters the frame cavity 203 from the outside of the first frame plate 201 through the first grille 204. The second frame plate 202 has a second grille 205, and the inner surface of the second frame plate 202 is connected to the second fan. The second fan is an air outlet fan, the air outlet of the second fan is communicated with the second grille 205, and the air flow generated by the second fan is discharged into the passenger compartment from the inside of the second frame plate 202 through the second grille 205. In this way, the air within the passenger compartment exchanges and circulates with the air within the frame cavity 203, so that the heat within the frame cavity 203 can be discharged, and the temperature around the noise reduction housing 1 can be kept stable.

The flow path of the airflow is as follows. The airflow enters the airflow channel 206 from the passenger compartment through the first grille 204, then enters the frame cavity 203, then enters the noise reduction housing 1, and then is discharged from the noise reduction housing 1 to the frame cavity 203, and then returns to the airflow channel 206, and then is discharged into the passenger compartment from the second grille 205.

A vehicle provided by an embodiment of the application includes any one of cooling assembly for the refrigerator compressor mentioned above. The vehicle having the cooling assembly for the refrigerator compressor has good noise reduction effect and the refrigerator compressor is not easy to be damaged.

To sum up, the present application provides a cooling and noise reduction structure 10 for a refrigerator compressor, a cooling assembly for a refrigerator compressor and a vehicle. The cooling and noise reduction structure 10 for the refrigerator compressor includes a noise reduction housing 1 and an air inlet device 2. The noise reduction housing 1 includes an air inlet hole 11, an air outlet hole 12, an air duct 14 and an accommodating cavity 13 for accommodating the refrigerator compressor. The air duct 14 is communicated with the accommodating cavity 13, and an end of the air duct 14 is communicated with the air inlet hole 11 and another end of the air duct 14 is communicated with the air outlet hole 12. The air inlet device 2 is connected to the noise reduction housing 1, and an air inlet of the air inlet device 2 is communicated with the air inlet hole 11. The cooling assembly for the refrigerator compressor includes a cooling and noise reduction structure 10 for the refrigerator compressor, and the vehicle includes the cooling assembly for the refrigerator compressor. The noise reduction housing 1 of the cooling and noise reduction structure 10 for the refrigerator compressor absorbs the noise generated by the refrigerator compressor, thereby reducing the spread of the noise. The air inlet device 2 makes the air flow, and quickly discharges the hot air within the noise reduction housing 1 to the outside of the noise reduction housing 1, thereby reducing the heat of the refrigerator compressor. The cooling assembly for the refrigerator compressor and the vehicle with the cooling and noise reduction structure 10 for the refrigerator compressor improve the experience of passengers.

According to actual needs, the above technical solutions may be combined to achieve the best technical effect.

The above description is only the principle and preferred embodiments of the present application. It should be noted that for those skilled in the art, various other modifications can be made based on the principle of the present application, which should also be regarded as the protection scope of the present application.

## Claims

1. A cooling and noise reduction structure for a refrigerator compressor, comprising a noise reduction housing and an air inlet device, wherein the noise reduction housing comprises an air inlet hole, an air outlet hole, an air duct and an accommodating cavity configured to accommodate the refrigerator compressor;
the air duct is communicated with the accommodating cavity, an end of the air duct is communicated with the air inlet hole, and another end of the air duct is communicated with the air outlet hole; and
the air inlet device is connected to the noise reduction housing, and an air inlet of the air inlet device is communicated with the air inlet hole.

2. The cooling and noise reduction structure for the refrigerator compressor according to claim 1, further comprising an installation tray, wherein the noise reduction housing is connected to the installation tray, and the air inlet device is connected to a side of the installation tray away from the noise reduction housing.

3. The cooling and noise reduction structure for the refrigerator compressor according to claim 2, wherein the installation tray has a grid or a through hole communicated with the air inlet hole, and the air inlet of the air inlet device is communicated with the grid or the through hole in the installation tray.

4. The cooling and noise reduction structure for the refrigerator compressor according to claim 2, wherein the installation tray has an installation groove, the installation groove has a bottom wall, and the bottom wall has a communication hole communicated with the air inlet hole; and
the air inlet device comprises a device frame and an air inlet fan, wherein the air inlet fan is installed in the device frame, and the device frame is installed in the installation groove.

5. The cooling and noise reduction structure for the refrigerator compressor according to claim 4, wherein the bottom wall comprises a first end and a second end, and a distance between the first end and an opening of the installation groove is smaller than a distance between the second end and the opening of the installation groove.

6. The cooling and noise reduction structure for the refrigerator according to claim 2, further comprising a connecting piece, wherein the noise reduction housing is detachably connected to the installation tray through the connecting piece.

7. The cooling and noise reduction structure for the refrigerator compressor according to claim 6, wherein the connecting piece comprises a cushion block, a connecting sheet and a connecting bolt; and
the cushion block is arranged on the installation tray, the connecting sheet is connected to the noise reduction housing, and the connecting bolt passes through the connecting sheet and the cushion block and is connected to the installation tray.

8. The cooling and noise reduction structure for the refrigerator compressor according to claim 7, wherein the connecting piece further comprises a clamping sheet, and the clamping sheet has a sheet body and two clamping legs; and
the two clamping legs are arranged at intervals, and the connecting bolt is clamped between the two clamping legs.

9. The cooling and noise reduction structure for the refrigerator compressor according to claim 8, wherein the sheet body is perpendicular to the two clamping legs.

10. The cooling and noise reduction structure for the refrigerator compressor according to claim 7, wherein the connecting sheet comprises a first sheet body and a second sheet body connected to the first sheet body; and
the first sheet body is connected to the noise reduction housing, the second sheet body is connected to the connecting bolt, and the first sheet body is perpendicular to the second sheet body.

11. The cooling and noise reduction structure for the refrigerator compressor according to claim 2, wherein the installation tray comprises a tray body and a support rod configured to be connected to an external frame, the support rod is connected to the tray body and extends outwards, and the noise reduction housing is connected to the tray body.

12. The cooling and noise reduction structure for the refrigerator compressor according to claim 11, wherein two support rods are arranged at intervals on the tray body, and the noise reduction housing is located between the two support rods.

13. A cooling assembly for a refrigerator compressor, comprising the cooling and noise reduction structure for the refrigerator compressor according to any one of claims 1 to 12.

14. The cooling assembly for the refrigerator compressor according to claim 13, further comprising a passenger compartment frame, and the passenger compartment frame has a first frame plate and a second frame plate, wherein a frame cavity and an airflow channel communicated with the frame cavity are formed between the first frame plate and the second frame plate, and the cooling and noise reduction structure for the refrigerator compressor is installed within the frame cavity;
the first frame plate has a first grille configured to be communicated with an interior of an passenger compartment, and the second frame plate has a second grille configured to be communicated with the interior of the passenger compartment, wherein the first grille and the second grille are respectively communicated with the airflow channel;
a first fan is arranged at an inner side of the first frame plate, and an air inlet of the first fan is communicated with the first grille; and
a second fan is arranged at an inner side of the second frame plate, and an air outlet of the second fan is communicated with the second grille.

15. A vehicle, comprising the cooling assembly for the refrigerator compressor according to any one of claims 13 to 14.
